# EUROPEAN PATENT SPECIFICATION

(11) **EP 3 875 236 B1**
(45) Date of publication and mention of the grant of the patent: **26.04.2023**
(21) Application number: 19878834.1
(22) Date of filing: 05.08.2019
(51) Int. Cl.: C03B 33/037, B26F 3/00, B28D 5/00, C03B 33/033

(54) **BREAKING DEVICE**
BRECHVORRICHTUNG
DISPOSITIF DE CASSAGE

(30) Priority: 30.10.2018 JP 2018204163
(43) Date of publication of application: 08.09.2021
(73) Proprietor: Mitsuboshi Diamond Industrial Co., Ltd., Settsu, Osaka 566-0034 (JP)
(72) Inventor: MITANI Takuro, Settsu city, Osaka 566-0034 (JP)
(74) Representative: TBK
(86) International application number: PCT/JP2019/030693
(87) International publication number: WO 2020/090179

(56) References cited:
- EP-A1- 1 408 012
- EP-A1- 2 157 059
- EP-A2- 2 159 016
- EP-A2- 2 159 200
- JP-A- H07 126 027
- JP-A- 2000 154 032
- JP-A- 2002 160 933
- US-A1- 2008 238 346
- US-A1- 2008 238 346

## Description

### Technical Field

The present invention relates to an apparatus breaking an object along a scribe line and, in particular, to control of operation thereof.

### Background Art

As a technique for separating a brittle material substrate, such as a glass substrate, a semiconductor substrate, and a ceramic substrate, and other plate-like objects to be separated, a technique of performing a scribing process of forming a scribe line on one main surface of an object to be separated and extending a vertical crack from the scribe line, and then performing a breaking process of further extending the crack in a direction of the thickness through application of an external force to break the object to be separated is already known (see Patent Document 1, for example).

The breaking process is typically performed using a breaking apparatus having a breaking bar that can be vertically raised and lowered. The breaking process is generally performed on the other main surface of the object to be separated, which has the scribe line preformed at a planned separation position on the one main surface, by bringing an edge at a leading end of the breaking bar into contact with the object to be separated along the planned separation position, and further pressing the edge. In this case, breaking is sometimes performed in a state of a member such as a film and tape (dicing tape) having been affixed to a front surface and a back surface of the object to be separated for protection and support.

In a case where breaking of an object to be separated of the same type is repeated multiple times, it should be in principle possible to perform breaking in accordance with one pressing condition (pressing amount) appropriately determined in advance if the object to be separated has the same condition, specifically, the same material and thickness and further the same state of formation of the scribe line.

In actuality, however, variations exist in thickness of the object to be separated and the protective member, in thickness (surface undulations) of a support supporting the object to be separated at breaking, and in translation operation and rotational operation performed by a drive mechanism of the support for positioning of a breaking position, and, for these reasons, breaking is sometimes not successfully performed in accordance with the appropriately determined pressing condition due to insufficient pressing of the edge. To prevent such a malfunction of insufficient pressing, a pressing condition providing an edge pressing amount that is approximately several tens of micrometers greater than an original optimum value can be set at breaking.

Setting the pressing condition in this manner, however, can cause a situation of excessive pressing. Excessive pressing of the breaking bar can cause chipping of the object to be separated. Chipping is nothing less than degradation in breaking quality.

### Prior Art Documents

### Patent documents

Patent Document 1: Japanese Patent Application Laid-Open No. 2017-13255.
Patent Document 2: EP2159200 discloses a breaking apparatus according to the preamble of claim 1.

### Summary

The present invention has been conceived in view of the above-mentioned problem, and it is an object of the present invention to provide a breaking apparatus capable of desirably performing breaking each time breaking is performed even in a case where breaking is repeated.

To solve the above-mentioned problem, a first aspect of the present invention is a breaking apparatus breaking, for separation of an object to be broken having one main surface having a preformed scribe line, the object to be broken from a side of the other main surface along the scribe line, the breaking apparatus comprising: a support on which the object to be broken is fixedly mounted; a breaking bar located above the support, and having an edge at a lower end; a lift mechanism raising and lowering the breaking bar; and a controller controlling operation of each component of the apparatus, wherein the lift mechanism includes: a motor rotating in a horizontal plane; and an operation conversion mechanism converting rotational operation of the motor to raising and lowering operation of the breaking bar, the controller includes: a motor controller controlling operation of the motor; a torque sensing part sensing torque acting on the motor; and a breaking processing part controlling operation of each component of the apparatus to cause the apparatus to break the object to be broken, and, in a state of the object to be broken being fixedly mounted on the support with the one main surface being in contact with the support, the breaking processing part causes the motor controller to rotate the motor to thereby operate the operation conversion mechanism so that the breaking bar is lowered toward a position on the other main surface of the object to be broken corresponding to a position of formation of the scribe line, and determines that breaking of the object to be broken is complete based on a change in the torque sensed by the torque sensing part when the breaking bar is being lowered.

A second aspect of the present invention is the breaking apparatus according to the first aspect, wherein the breaking processing part acquires a value of the torque sensed by the torque sensing part at predetermined time intervals, and compares, when the breaking bar is being lowered and the value of the torque is equal to or greater than a predetermined first threshold corresponding to a value of the torque when the breaking bar is surely pressed into the object to be broken, a most recent value of the torque with a second threshold determined based on a maximum value of the torque acquired previously each time the most recent value of the torque is acquired, and determines that breaking of the object to be broken is complete when the most recent value of the torque is equal to or smaller than the second threshold.

A third aspect of the present invention is the breaking apparatus according to the second aspect, wherein the second threshold is a value obtained by multiplying the maximum value of the torque by a coefficient α (0 < α <1).

According to the first to the third aspects of the present invention, a work can surely be broken without any malfunctions, such as insufficient pressing and excessive pressing of the breaking bar, caused in conventional breaking processing each time breaking is performed even in a case where breaking is repeated.

In particular, according to the second and third aspects, completion of breaking can promptly and surely be grasped to avoid excessive pressing of the breaking bar.

### Brief Description of Drawings

FIG. 1 illustrates a schematic configuration of a breaking apparatus 100.
FIG. 2 schematically illustrates a configuration pertaining to control of raising and lowering operation of a breaking bar 1 of the breaking apparatus 100.
FIG. 3 shows a change in torque T of a servomotor 4 from the start until the end of breaking processing along with the state of rotation of the servomotor 4 and a change in positional relationship between a work Wand the breaking bar 1.
FIG. 4 shows procedures of the breaking processing.

### Description of Embodiments

### <Overview of Breaking Apparatus>

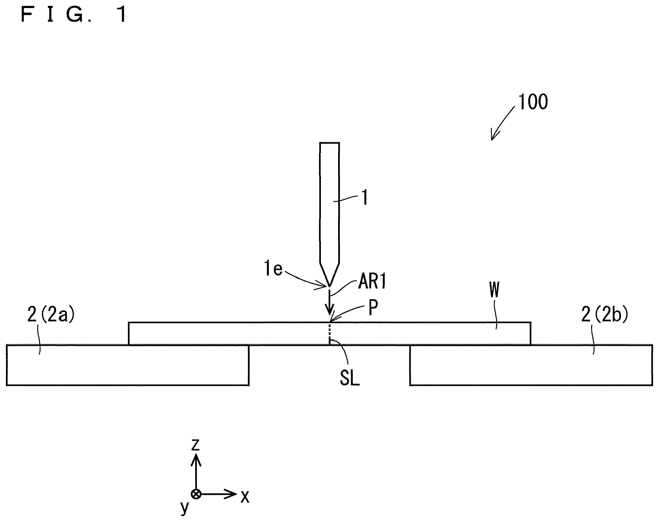

FIG. 1 illustrates a schematic configuration of a breaking apparatus 100 according to the present embodiment. A right-handed xyz coordinate having a horizontal plane as an xy plane and a vertically upward direction as a positive direction of a z-axis is shown in FIG. 1.

The breaking apparatus 100 is an apparatus for separating an object to be broken (hereinafter, also referred to as a work) W along a planned separation position. On one main surface of the work W, a scribe line SL is preformed along the planned separation position.

The breaking apparatus 100 mainly includes a breaking bar 1 having, at a lower end, an edge 1e that is triangular in cross section perpendicular to a longitudinal direction thereof and capable of being raised and lowered in a vertical direction (a direction of the z-axis) and a support 2 on which the work W is mounted. FIG. 1 illustrates a case where a direction of extension (the longitudinal direction) of the edge 1e of the breaking bar 1 located above the support 2 coincides with a direction of a y-axis, and the support 2 includes a pair of supports 2a and 2b separated from each other in a direction of an x-axis. The support 2 may include one continuous elastic body at least as an uppermost portion thereof. Translation operation and rotational operation can be performed by a drive mechanism, which is not illustrated, and positioning of the work W may be achieved by such operation.

When the breaking apparatus 100 performs breaking processing of breaking the work W, the work W is fixedly mounted on the support 2 by an appropriate fixing means, which is not illustrated, to be oriented so that the one main surface having the scribe line SL is in contact with the support 2, and a direction of extension of the scribe line SL coincides with the direction of extension (the direction of the y-axis in FIG. 1) of the edge 1e of the breaking bar 1.

Although not illustrated for ease of illustration in FIG. 1, the work W is sometimes fixedly mounted on the support 2 in a state of a member such as a film and tape (dicing tape) having been affixed to a front surface and a back surface thereof for protection and support, depending on the type and the size of the work W.

When the work W is fixedly mounted in the above-mentioned manner, the breaking bar 1 is lowered toward the other main surface of the work W not having the scribe line SL as an upper surface of the work W at the time, as indicated by an arrow AR1. The breaking bar 1 is brought into contact with the other main surface at a breaking position P corresponding to the position of formation of the scribe line SL, and is further pushed down (pressed). A crack of the work W thus extends from the scribe line SL toward the breaking position P by the principle of three-point bending, and, as a result, the work W is separated.

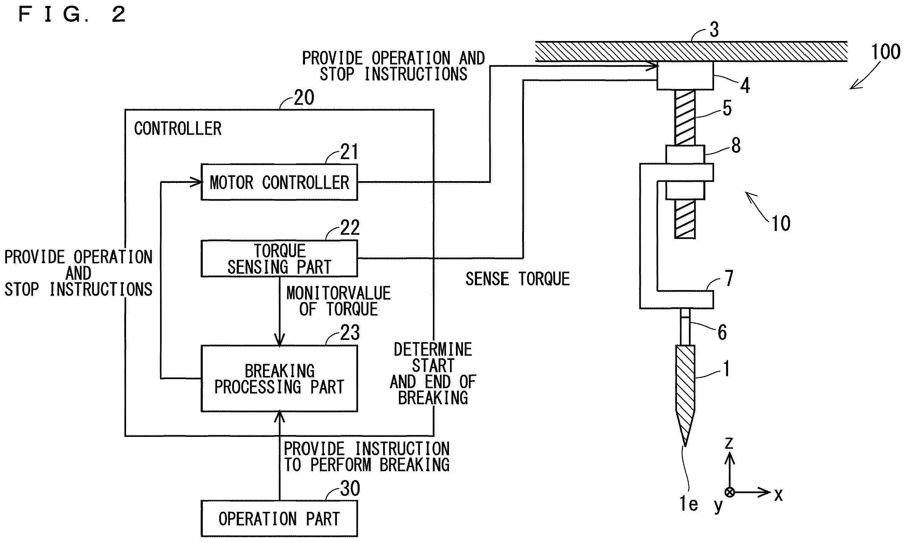

FIG. 2 schematically illustrates a configuration pertaining to control of raising and lowering operation of a breaking bar 1 of the breaking apparatus 100. The breaking apparatus 100 mainly includes a lift mechanism 10 actually raising and lowering the breaking bar 1, a controller 20 controlling operation of each component of the breaking apparatus 100 including the lift mechanism 10, and an operation part 30 that an operator operates when inputting an instruction to perform breaking and other instructions.

The lift mechanism 10 includes a servomotor 4 attached to a rigid support body (a frame, a top board, and the like of the lift mechanism 10) 3 and having a rotation axis, which is not illustrated, positively and negatively rotatable in a horizontal plane (an xy plane), a threaded shaft 5 direct-coupled to the rotation axis of the servomotor 4 and extending vertically downward, a holder 6 holding the breaking bar 1, a lift part 7 to which the holder 6 is detachably fixed, and a nut 8 screwed with the threaded shaft 5 to constitute a ball screw. In the lift mechanism 10, positive and negative rotational operation within a predetermined range of the servomotor 4 is converted to raising and lowering operation within a predetermined range of the lift part 7 through the ball screw. In other words, the threaded shaft 5, the nut 8, and the lift part 7 constitute an operation conversion mechanism converting the rotational operation of the servomotor 4 to the raising and lowering operation of the breaking bar 1. By lowering the lift part 7 with the rotation of the servomotor 4 in a state that the holder 6 holding the breaking bar 1 is fixed in a posture that the edge 1e is at the lower end, the breaking bar 1 can break the work W.

The configuration and the form of each component of the lift mechanism 10 are only schematically illustrated in FIG. 2, and an actual configuration may be different from the illustrated configuration as long as similar operation is achieved.

The controller 20 mainly includes a motor controller 21, a torque sensing part 22, and a breaking processing part 23.

In response to an operation instruction and a stop instruction from the breaking processing part 23, the motor controller 21 provides an operation signal and a stop signal to the servomotor 4 to start and stop operation of the servomotor 4.

The torque sensing part 22 senses torque acting on the servomotor 4 at rotation of the servomotor 4. A value of the torque sensed by the torque sensing part 22 is constantly monitored by the breaking processing part 23, and is acquired as necessary to be used for determination of a breaking state.

In response to a performance instruction provided through the operation part 30, the breaking processing part 23 controls operation of each component of the breaking apparatus 100 to cause the breaking apparatus 100 to perform the breaking processing on the work W.

### <Breaking Processing>

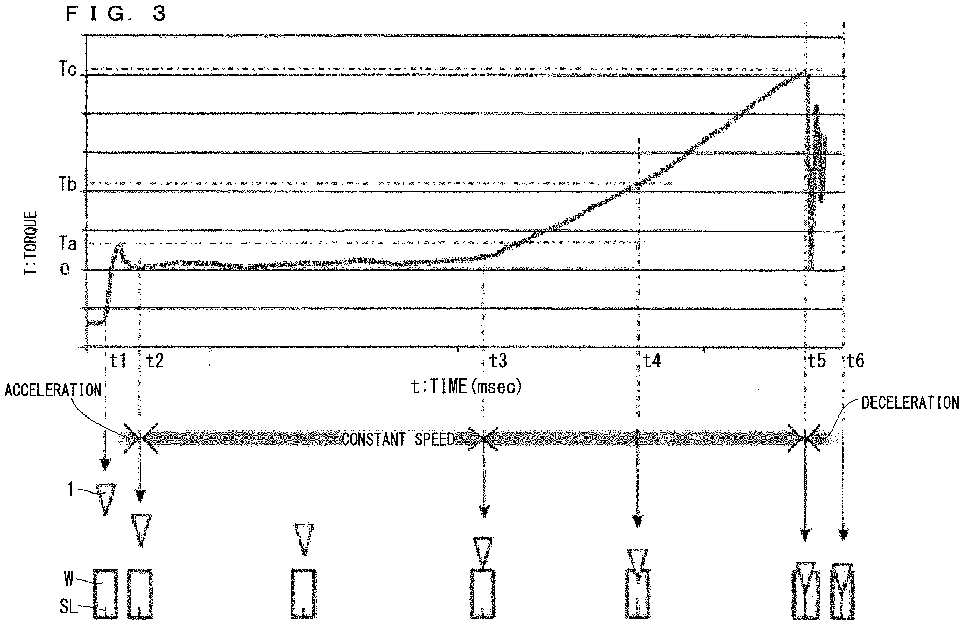

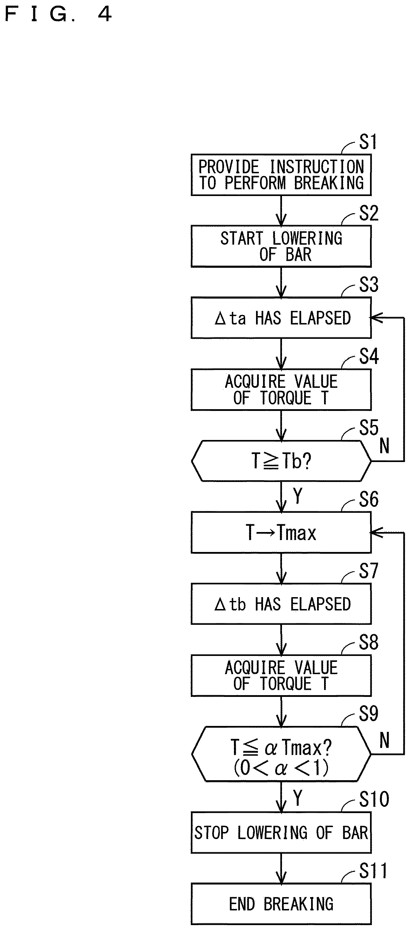

The breaking processing performed by the breaking apparatus 100 will be described below. FIG. 3 shows a change in torque T of the servomotor 4 from the start until the end of the breaking processing along with the state of rotation of the servomotor 4 and a change in positional relationship between the work W and the breaking bar 1. FIG. 4 shows procedures of the breaking processing.

First, when the instruction to perform the breaking processing is provided through the operation part 30 (step S1) in a state of the work W being fixedly mounted on the support 2 in the above-mentioned orientation, and the breaking bar 1 being disposed at a predetermined initial position (t = 11), the breaking processing part 23 provides an instruction to operate the servomotor 4 to the motor controller 21. In response to the instruction, the motor controller 21 provides the operation signal to the servomotor 4, so that rotation of the servomotor 4 is started, and lowering of the breaking bar 1 is thereby started (step S2). The breaking bar 1 continues to be lowered by rotation of the servomotor 4 until the stop instruction is provided from the breaking processing part 23. With the start of lowering of the breaking bar 1, sensing of the torque T of the servomotor 4 by the torque sensing part 22 and monitoring of the value of the torque T by the breaking processing part 23 are started.

More particularly, as shown in FIG. 3, immediately after the performance instruction is provided when t = 11, great acceleration torque Ta is once exerted on the servomotor 4 to move the breaking bar 1 at rest, and the breaking bar 1 is accelerated, but the value of the torque T decreases soon afterward, and, after t = t2, the torque T of the servomotor 4 has a substantially constant value (approximately zero) smaller than the acceleration torque Ta for a whole. The breaking bar 1 is thereby moved at a constant speed.

When a predetermined time Δta has elapsed since the start of lowering of the breaking bar 1 (step S3), the breaking processing part 23 acquires the monitored value of the torque T at the time (step S4), and determines whether the value of the torque T is equal to or greater than a predetermined threshold Tb (step S5). The determination is made to grasp a state of the breaking bar 1 surely starting pressing of the work W.

The threshold Tb is herein a value of the torque T corresponding to the value when the breaking bar 1 is surely pressed into the work W. A value of the threshold Tb should experimentally be determined in advance in light of a material for and the thickness of the work W, specs of the breaking bar 1, and the like. The threshold Tb, however, is set to a value greater than the acceleration torque Ta to prevent erroneous determination. Although depending on a speed of lowering of the breaking bar 1, a value of the time Δta is preferably set to approximately 0.125 msec to 1 msec.

In a case shown in FIG. 3, the breaking bar 1 is brought into contact with the work W strictly when t = t3, and, thereafter, the breaking bar 1 is pressed into the work W, and thus the value of the torque T increases, but, in the present embodiment, it is determined whether the breaking bar 1 is pressed into the work W for the first time when t = t4 at which the value of the torque T becomes Tb after t = t3.

As shown in FIG. 3, the breaking bar 1 moved at the constant speed before being brought into contact with the work W is brought into contact with the work W, and is moved in a state of being pressed into the work W.

When the value of the torque T acquired in step S4 is smaller than the threshold Tb (NO in step S5), processing in and after step S3 is repeated. That is to say, the breaking processing part 23 acquires the value of the torque T, and compares the value with the threshold Tb again after the elapse of the predetermined time Δta.

On the other hand, when the value of the torque T acquired in step S4 is equal to or greater than the threshold Tb (TES in step S5), the breaking processing part 23 sets the value of the torque T at the time to a maximum value Tₘₐₓ (step S6).

When a predetermined time Δtb has further elapsed thereafter (step S7), the breaking processing part 23 acquires the monitored value of the torque T at the time (step S8), and determines whether the value of the torque T is equal to or smaller than a threshold αTₘₐₓ determined as a value obtained by multiplying the maximum value Tₘₐₓ by a predetermined coefficient α (0 < α < 1) (step S9).

The determination is made in light of the fact that the value of the torque T of the servomotor 4 having gradually increased since the start of pressing of the breaking bar 1 into the work W becomes a maximum value at the exact moment when the crack having extended from the scribe line SL reaches the other end surface to complete breaking, and rapidly decreases upon completion of breaking of the work W. The threshold αTₘₐₓ is a value of the torque T corresponding to the situation that the value is determined to surely have decreased after reaching the maximum value, that is, when it is determined that breaking is surely complete. In the case shown in FIG. 3, the work W is broken when t = t5 at which the value of the torque T having increased since t = t3 reaches a maximum value Tc, and thereafter decreases while fluctuating violently.

Specifically, the fact that it can be determined that breaking of the work W is complete when a ratio of the most recent value of the torque T to the maximum value Tₘₐₓ updated constantly each time the time Δtb has elapsed becomes equal to or smaller than the predetermined coefficient α is utilized. A value of the coefficient α should experimentally be determined in advance in light of the material for and the thickness of the work W, the specs of the breaking bar 1, and the like, but, in a case where α = 0.01, for example, it can be determined that breaking of the work W is complete when the value of the torque T has decreased from the maximum value by 1% or more. Although depending on the speed of lowering of the breaking bar 1, a value of the time Δtb is preferably set to approximately 0.125 msec to 1 msec (e.g., 0.5 msec).

When it is determined that the value of the torque T acquired in step S8 exceeds the threshold αTₘₐₓ (NO in step S9), processing in and after step S6 is repeated. That is to say, the breaking processing part 23 newly sets the value of the torque T targeted for determination to the maximum value Tₘₐₓ, and acquires the value of the torque T again after the elapse of the predetermined time Δtb, and compares the value with the threshold αTₘₐₓ. While the value of the torque T increases as in a time between the time when t = t4 and the time when t = t5 in FIG. 3, the value of the torque T acquired most recently is naturally greater than the value of the maximum value Tₘₐₓ set previously, and thus erroneous determination of YES is not made in step S9.

On the other hand, when it is determined that the most recent value of the torque T acquired in step S8 is equal to or smaller than the threshold αTₘₐₓ (YES in step S9), breaking of the work W is complete before the time, and thus the breaking processing part 23 provides an instruction to stop the servomotor 4 to the motor controller 21. In response to the instruction, the motor controller 21 provides the stop signal to the servomotor 4, so that rotation of the servomotor 4 is stopped, and lowering of the breaking bar 1 is thereby stopped (step S10). In FIG. 3, lowering of the breaking bar 1 is stopped when t = t6. When lowering of the breaking bar 1 is stopped, the breaking processing ends (step S11).

In the breaking processing according to the present embodiment performed through the above-mentioned procedures, it can surely be determined that breaking of the work W is complete based on a change in value of the torque of the servomotor 4, and, thereafter, the breaking bar 1 can promptly be decelerated, and stopped. The work W can thereby be surely broken without any malfunctions, such as insufficient pressing and excessive pressing of the breaking bar 1, caused in conventional breaking processing, even in a case where variations exist in thickness of the work W and the like, in thickness (surface undulations) of the support 2 at breaking, and in translation operation and rotational operation performed by the drive mechanism of the support 2. In this case, it can be said that the breaking processing part 23 functions as a breaking completion determination part determining that breaking of the work W is complete.

This means that breaking can desirably be performed each time breaking is performed even in a case where breaking is repeated.

Furthermore, in this case, the distance by which the breaking bar 1 progresses from the time when t = t5 as actual time of completion of breaking to the time when t = t6 as time of the stop of lowering of the breaking bar 1 can be reduced to approximately several micrometers at a maximum in a case where the work W is a glass substrate, for example, although this is not always the case because the distance depends on the speed of lowering of the breaking bar 1, a speed of processing performed by the controller 20, and the like. This is a smaller value compared with a pressing amount (approximately several tens of micrometers) added to an original optimum pressing amount to avoid insufficient pressing in the conventional breaking processing.

In the breaking processing according to the present embodiment, completion of breaking can promptly and surely be grasped to avoid excessive pressing of the breaking bar.

As described above, according to the present embodiment, it is surely determined that breaking of the work is complete based on the change in torque of the servomotor to lower the breaking bar, and then lowering is promptly stopped, so that the work can surely be broken without any malfunctions, such as insufficient pressing and excessive pressing of the breaking bar, caused in the conventional breaking processing each time breaking is performed even in a case where breaking is repeated.

## Claims

1. A breaking apparatus (100) breaking, for separation of an object (W) to be broken having one main surface having a preformed scribe line (SL), said object to be broken from a side of the other main surface along said scribe line, the breaking apparatus comprising:
a support (2, 2A, 2B) on which said object (W) to be broken is fixedly mounted;
a breaking bar (1) located above said support, and having an edge at a lower end;
a lift mechanism (10) raising and lowering said breaking bar; and
a controller (20) controlling operation of each component of said apparatus, wherein said lift mechanism (10) includes:
a motor (4) rotating in a horizontal plane; and
an operation conversion mechanism (5,7,8) converting rotational operation of said motor (4) to raising and lowering operation of said breaking bar (1), said controller (20) includes:
a motor controller (21) controlling operation of said motor; **characterised in that** the controller (20) includes;
a torque sensing part (22) sensing torque acting on said motor (4); and
a breaking processing part (23) controlling operation of each component of said apparatus to cause said apparatus to break said object to be broken, and
in a state of said object (W) to be broken being fixedly mounted on said support (2, 2A, 2B) with said one main surface being in contact with said support, said breaking processing part (23) causes said motor controller (21) to rotate said motor (4) to thereby operate said operation conversion mechanism (5, 7, 8) so that said breaking bar (1) is lowered toward a position on said the other main surface of said object to be broken corresponding to a position of formation of said scribe line (SL), and determines that breaking of said object (W) to be broken is complete based on a change in said torque sensed by said torque sensing part (22) when said breaking bar (1) is being lowered.

2. The breaking apparatus (100) according to claim 1, wherein said breaking processing part (23)
acquires a value of said torque sensed by said torque sensing part (22) at predetermined time intervals, and
compares, when said breaking bar (1) is being lowered and said value of said torque is equal to or greater than a predetermined first threshold corresponding to a value of said torque when said breaking bar (1) is surely pressed into said object (W) to be broken, a most recent value of said torque with a second threshold determined based on a maximum value of said torque acquired previously each time said most recent value of said torque is acquired, and determines that breaking of said object (W) to be broken is complete when said most recent value of said torque is equal to or smaller than said second threshold.

3. The breaking apparatus (100) according to claim 2, wherein
said second threshold is a value obtained by multiplying said maximum value of said torque by a coefficient α (0 < α <1).

## Patentansprüche

1. Brechvorrichtung (100) zum Trennen eines zu brechenden Gegenstandes (W), der eine Hauptfläche hat, die eine vorgeformte Anrißlinie (SL) aufweist, wobei der Gegenstand von einer Seite der anderen Hauptfläche entlang der Anrißlinie gebrochen werden soll, wobei die Brechvorrichtung aufweist:
einen Träger (2, 2A, 2B), auf dem der zu brechende Gegenstand (W) fest montiert ist;
eine Brechstange (1), die sich oberhalb des Trägers befindet und an einem unteren Ende eine Kante hat;
einen Hebemechanismus (10), der die Brechstange anhebt und absenkt, und
eine Steuereinheit (20), die den Betrieb jeder Komponente der Vorrichtung steuert, wobei der Hebemechanismus (10) Folgendes beinhaltet:
einen Motor (4), der sich in einer horizontalen Ebene dreht, und
einen Antriebsumwandlungsmechanismus (5, 7, 8), der den Drehbetrieb des Motors (4) in einen Anhebe- und Absenkbetrieb der Brechstange (1) umwandelt, wobei die Steuereinheit (20) Folgendes beinhaltet;
eine Motorsteuereinheit (21), die den Betrieb des Motors steuert,
**dadurch gekennzeichnet, dass die Steuereinheit (20) Folgendes beinhaltet;**
ein Drehmomenterfassungsteil (22), das das auf den Motor (4) wirkende Drehmoment erfasst; und
einen Brechablaufsteuerungsteil (23), das den Betrieb jeder Komponente der Vorrichtung steuert, um die Vorrichtung zu veranlassen, den zu zerbrechenden Gegenstand zu brechen, und der Brechablaufsteuerungsteil (23) die Motorsteuereinheit (21) in einem Zustand veranlasst, in dem der Gegenstand (W) fest an dem Träger (2, 2A, 2B) montiert ist, wobei die eine Hauptfläche in Kontakt mit dem Träger ist, den Motor (4) zu drehen, um dadurch den Antriebsumwandlungsmechanismus (5, 7, 8) so zu betreiben, dass die Brechstange (1) in Richtung einer Position an der anderen Hauptfläche des zu brechenden Gegenstands abgesenkt wird, die einer Position der Ausgestaltung der Anrißlinie (SL) entspricht, und bestimmt, dass das Brechen des zu brechenden Gegenstands (W) abgeschlossen ist, basierend auf einer Änderung des Drehmoments, das von dem Drehmomenterfassungsteil (22) erfasst wird, wenn die Brechstange (1) abgesenkt wird.

2. Brechvorrichtung (100) nach Anspruch 1, wobei der Brechablaufsteuerungsteil (23)
einen Wert des mittels dem Drehmomenterfassungsteil (22) erfassten Drehmoments in vorbestimmten Zeitintervallen erfasst, und
wenn die Brechstange (1) abgesenkt wird und der Wert des Drehmoments gleich oder größer als ein vorbestimmter erster Schwellenwert ist, der einem Wert des Drehmoments entspricht, wenn die Brechstange (1) sicher in den zu brechende Gegenstand (W) gedrückt wird,
einen aktuellsten Wert des Drehmoments mit
einem zweiten Schwellenwert vergleicht, der auf der Grundlage eines Maximalwerts des Drehmoments bestimmt wird, der jedes Mal ermittelt wird, bevor der aktuellste Wert des Drehmoments ermittelt wird, und
bestimmt, dass das Brechen des zu brechenden Gegenstands (W) abgeschlossen ist, wenn der aktuellste Wert des Drehmoments gleich oder kleiner als der zweite Schwellenwert ist.

3. Brechvorrichtung (100) nach Anspruch 2, wobei der zweite Schwellenwert ein Wert ist, der durch Multiplikation des Maximalwertes des Drehmoments mit einem Koeffizienten α (0 < α <1) erhalten wird.

## Revendications

1. Appareil pour casser (100), cassant, pour la séparation d'un objet (W) destiné à être cassé, ayant une surface principale ayant une ligne de découpe préformée (SL), ledit objet destiné à être cassé à partir d'un côté de l'autre surface principale le long de ladite ligne de découpe, l'appareil pour casser comprenant :
un support (2, 2A, 2B) sur lequel ledit objet (W) destiné à être cassé est monté de façon fixe ;
une barre pour casser (1) située au-dessus dudit support, et ayant un bord à une extrémité inférieure ;
un mécanisme de levage (10) élevant et abaissant ladite barre pour casser ; et
une unité de commande (20) commandant le fonctionnement de chaque composant dudit appareil, dans lequel
ledit mécanisme de levage (10) inclut :
un moteur (4) entrant en rotation dans un plan horizontal ; et
un mécanisme de conversion de fonctionnement (5, 7, 8) convertissant un fonctionnement rotationnel dudit moteur (4) en un fonctionnement d'élévation et d'abaissement de ladite barre pour casser (1),
ladite unité de commande (20) inclut :
une unité de commande de moteur (21) commandant le fonctionnement dudit moteur ;
**caractérisé en ce que** l'unité de commande (20) inclut :
une partie de détection de couple (22) détectant un couple agissant sur ledit moteur (4) ; et
une partie de traitement pour casser (23) commandant le fonctionnement de chaque composant dudit appareil pour faire en sorte que ledit appareil casse ledit objet destiné à être cassé, et
dans un état où ledit objet (W) destiné à être cassé est monté de façon fixe sur ledit support (2, 2A, 2B), avec ladite une surface principale en contact avec ledit support, ladite partie de traitement pour casser (23) fait en sorte que ladite unité de commande de moteur (21) mette en rotation ledit moteur (4) pour ainsi faire fonctionner ledit mécanisme de conversion de fonctionnement (5, 7, 8) pour que ladite barre pour casser (10) soit abaissée vers une position sur ladite autre surface principale dudit objet destiné à être cassé correspondant à une position de formation de ladite ligne de découpe (SL), et détermine que le cassage dudit objet (W) destiné à être cassé est achevé sur la base d'un changement dudit couple détecté par ladite partie de détection de couple (22) lorsque ladite barre pour casser (1) est en train d'être abaissée.

2. Appareil pour casser (100) selon la revendication 1, dans lequel ladite partie de traitement pour casser (23) acquiert une valeur dudit couple détecté par ladite partie de détection de couple (22) à des intervalles de temps prédéterminés, et compare, lorsque ladite barre pour casser (1) est en train d'être abaissée et ladite valeur dudit couple est égale ou supérieure à un premier seuil prédéterminé correspondant à une valeur dudit couple lorsque ladite barre pour casser (1) est pressée de façon sûre dans ledit objet (W) destiné à être cassé, une valeur la plus récente dudit couple à un second seuil déterminé sur la base d'une valeur maximum dudit couple acquise auparavant à chaque fois que ladite valeur la plus récente dudit couple est acquise, et détermine que le cassage dudit objet (W) destiné à être cassé est achevé lorsque ladite valeur la plus récente dudit couple est égale ou inférieure audit second seuil.

3. Appareil pour casser (100) selon la revendication 2, dans lequel
ledit second seuil est une valeur obtenue en multipliant ladite valeur maximum dudit couple par un coefficient α (0 < α < 1).
